# NOUVEAU FASCICULE DE BREVET EUROPEEN

(11) **EP 0 427 601 B2**
(45) Date de publication et mention de la décision concernant l'opposition: **01.04.2009**
(45) Mention de la délivrance du brevet: 24.03.1999
(21) Numéro de dépôt: 90403101.0
(22) Date de dépôt: 02.11.1990
(51) Int. Cl.: G07F 7/10, H04N 7/173

(54) **Procédé d'authentification d'une carte à microprocesseur, et système le mettant en oeuvre**
Verfahren zur Beglaubigung einer Mikroprozessorkarte und System zu seiner Durchführung
Method for authenticating a microprocessor-card, and system for implementing it

(30) Priorité: 08.11.1989 FR 8914639
(43) Date de publication de la demande: 15.05.1991
(73) Titulaire: THOMSON R&D France SNC, 92100 Boulogne-Billancourt (FR)
(72) Inventeur: Diehl, Eric, F-92045 Paris la Défense (FR); Hamon, Joel, F-92045 Paris la Défense (FR); Leduc, Michel, F-92045 Paris la Défense (FR)
(74) Mandataire: Ruellan-Lemonnier, Brigitte

(56) Documents cités:
- EP-A- 0 137 999
- EP-A- 0 335 768
- EP-A- 0 379 333
- EP-A1- 0 294 248
- EP-A1- 0 311 470
- EP-A2- 0 019 286
- EP-A2- 0 284 133
- EP-A2- 0 325 238
- WO-A1-85/00718
- US-A- 4 599 647
- L'ECHO DES RECHERCHES, vol., no.184, 1988, page 15 - 24, P. REMERY ET AL 'LE PAIEMENT ELECTRONIQUE'

## Description

La présente invention a pour objet un procédé d'authentification d'une carte à microprocesseur et un système le mettant en oeuvre.

Dans un réseau de télévision à péage, tel que celui décrit par les demandes de brevets français FR-A- 2 631 193 (date de publication : 10.11.1989) et FR-A- 2 641 152 (date de publication : 29.06.1990), les décodeurs des abonnés nécessitent, pour désembrouiller des émissions cryptées, des cartes à microprocesseur (connues sous l'appellation de "smart cards"). Pour limiter les risques de fraude, on peut prévoir de changer ces cartes périodiquement, par exemple chaque trimestre, en "dévalidant" les cartes venant à expiration par envoi d'une tension appropriée à une entrée déterminée de la carte. Toutefois, ces réseaux ne sont pas prévus pour détecter l'utilisation de cartes contrefaites ou de simulateurs de cartes.

Dans le contexte de l'utilisation d'une carte à puce, le document "L'Echo des Recherches" n°134, 4ème trimestre 1988, pages 15-24, concerne le paiement électronique. Le document EP-A-311 470 concerne un procédé et système d'authentification d'accréditation ou de messages à apport nul de connaissances.

Dans le contexte de la télévision à péage, le document WO-A-8500718 concerne un système de sécurité pour des signaux de télévision brouillés.

La présente invention a pour objet un procédé empêchant d'utiliser des cartes contrefaites ou de les simuler, ou de réutiliser des cartes à microprocesseur après la fin de leur période de validité, dans un système comportant au moins un centre de gestion et au moins un terminal qui lui est relié.

La présente invention a également pour objet un dispositif de mise en oeuvre de ce procédé, dispositif simple et ne nécessitant pas de transformations importantes du matériel déjà utilisé sur lequel il peut être implanté.

Le procédé conforme à l'invention est un procédé d'authentification de cartes à microprocesseur dans un système comportant au moins un centre de gestion et/ou de contrôle et/ou de distribution de prestations relié à au moins un terminal comprenant au moins un lecteur de cartes à microprocesseur, ledit procédé comportant l'étape d'authentification de cartes, ledit procédé étant caractérisé par le fait qu'il consiste à faire effectuer à la carte ou aux cartes de chaque terminal, pendant au moins une partie du temps pendant lequel une carte y est insérée ou des cartes y sont insérées, au moins une opération d'authentification ladite opération d'authentification étant commandée par des messages produits de manière irrégulière par le centre de gestion.

L'invention a aussi pour objet un système d'authentification de cartes à microprocesseur comportant au moins un centre de gestion et au moins un terminal comprenant au moins un lecteur de cartes à microprocesseur, le lecteur du terminal comportant des moyens de commande de production de signaux d'authentification et des moyens d'analyse de réponse de la ou des cartes utilisées, caractérisé en ce que le terminal comporte des moyens d'inhibition et/ou de dévalidation de carte et en ce que le centre de gestion comporte un circuit émettant de manière irrégulière des messages de commande d'opérations d'authentification pour faire effectuer au moins une opération d'authentification à la ou aux cartes de chaque terminal pendant au moins une partie du temps pendant lequel une ou des cartes sont insérées.

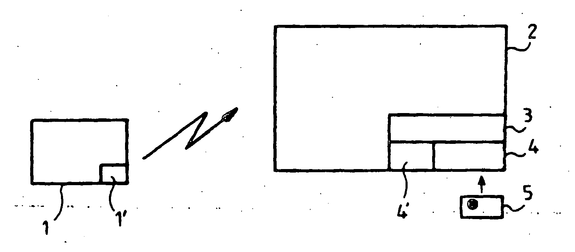

La présente invention sera mieux comprise à la lecture de la description détaillée d'un mode de réalisation, pris à titre d'exemple non limitatif et illustré par le dessin annexé, dont la figure unique est un bloc diagramme d'un système incluant un dispositif conforme à l'invention.

L'invention est décrite ci-dessous en référence à un réseau de télévision à péage, mais il est bien entendu qu'elle peut être mise en oeuvre dans de nombreux autres systèmes comportant au moins un centre de gestion et/ou de contrôle et/ou de distribution de biens ou de prestations payantes diverses appelé ici simplement "centre de gestion", relié par câbles ou par ondes radio-électriques à un ou plusieurs appareils accessibles à des utilisateurs ou à des abonnés se servant de cartes à microprocesseur pour obtenir ces prestations. A titre d'exemple, on peut citer un système bancaire ou un réseau de pompes à essence ou un réseau de caisses enregistreuses de magasins de vente de produits divers ou bien un système de surveillance de mouvements de biens et/ou de personnes.

Pour simplifier les explications, on n'a représenté sur le dessin, en plus de l'émetteur 1 de programmes de télévision, qu'un seul récepteur de télévision d'abonné 2. L'émetteur 1 diffuse, au moins une partie du temps, des programmes cryptés.

Le récepteur 2 comporte dans son canal vidéo (non représenté en détail), un circuit numérique 3 de désembrouillage, par exemple tel que celui décrit dans la demande de brevet français 88 06121.

Le circuit 3 est relié à un circuit 4 d'interface coopérant avec une carte 5 à microprocesseur ("smart card") ou une carte à microprocesseur et à "jetons" (carte pré-chargée comportant un certain nombre de connexions, correspondant chacune à un crédit de programme ("pay per view") qui sont "grillées" au fur et à mesure de l'utilisation de la carte.

Comme précisé dans la demande de brevet précitée, l'émetteur 1 diffuse, en plus des programmes, des données permettant de désembrouiller ces programmes lorsqu'ils sont embrouillés à l'émission. La carte 5 permet de désembrouiller ces programmes, par exemple de la façon décrite dans la susdite demande de brevet français.

Selon l'invention, l'émetteur 1 diffuse sous la commande d'un circuit 1', en plus desdites données de désembrouillage et, de préférence indépendamment de ces données, des messages d'authentification. Ces messages d'authentification sont avantageusement cryptés de toute façon appropriée. La carte 5 comporte, dans sa section protégée, en plus des données permettant de désembrouiller lesdits programmes, des données permettant de décrypter lesdits messages et d'y répondre.

Bien entendu, les données secrètes de "signature" de chaque carte sont uniques et connues uniquement du centre de gestion, deux cartes ne pouvant avoir la même "signature".

Les messages émis, irrégulièrement, par l'émetteur 1 sont cryptés et, de préférence mélangés à des données de service. Selon un mode de réalisation avantageux, ces messages commandent à un circuit 4' du lecteur de cartes 4 de faire effectuer à la carte 5 au moins deux opérations combinatoires différentes.

La carte 5 comporte dans une zone de sa mémoire, inhibée en accès depuis l'extérieur, en particulier deux sortes de données : d'une part son identité ID, qui n'est pas nécessairement secrète, et d'autre part au moins un nombre secret S très long (plusieurs centaines de bits par exemple), qui représente sa "signature".

L'identité ID peut avantageusement servir à mettre hors service des cartes contrefaites. En effet, il est presque certain que des cartes contrefaites sont toutes identiques à une carte valide et ont donc toutes la même identité. Une personne du centre de gestion peut acheter auprès d'un ou de plusieurs revendeur des cartes suspectes et en vérifier l'authenticité, ce qui est facile à faire puisque le fabricant de cartes communique au centre de gestion les données mémorisées dans les cartes. Si la vérification révèle que les cartes sont contrefaites, il suffit au centre de gestion d'envoyer des ordres de dévalidation aux cartes ayant cette même identité.

Les opérations combinatoires effectuées par les cartes d'un réseau reposent sur des concepts statistiques, et la loi des grands nombres, assurant une connaissance nulle du nombre secret S ("zero knowledge"). On se réfèrera par exemple à l'article de MM. GOLDWASSER, MICALI et RACKOFF : "The knowledge Complexity of Interactive Proof Systems", 17^{th} ACM Symposium on Theory of Computation, Mai 1985 ainsi qu'à l'article de A. SHAMIR : "Identity-Based Cryptosystems and Signature Schemes", Proceedings of Crypto'84, notes de lecture dans Computer Science n° 196, Editions Springer, 1985.

Pour ce faire, la carte 5 ne transmet jamais la valeur S au lecteur de cartes mais soit un nombre obtenu (par exemple par élévation au carré) à partir d'un nombre choisi aléatoirement par la carte, soit un nombre résultant de la combinaison de S avec ce nombre choisi aléatoirement. L'émetteur 1 demande, de façon aléatoire, au lecteur de cartes 4 de faire effectuer à la carte 5 soit un calcul à partir dudit nombre obtenu à partir d'un nombre choisi aléatoirement pour retrouver ce nombre choisi, (extraction d'une racine carrée pour l'exemple précité), soit une combinaison dudit nombre choisi aléatoirement avec le nombre S. Ainsi, la carte 5 ne transmet jamais au lecteur 4 le nombre secret S, mais des nombres à partir desquels il est extrêmement improbable de retrouver S, ce qui est d'autant plus vrai si les opérations effectuées par la carte sont rapprochées dans le temps.

Pour augmenter la sécurité, on peut prévoir de dévalider définitivement la carte 5 au premier faux résultat (inhibition physique). On peut en outre faire afficher dans le récepteur 2, par exemple sur l'écran de ce récepteur, une indication de carte non valide. Bien entendu, le lecteur de cartes 5 doit alors comporter des moyens empêchant tout "pirate de bloquer un signal de dévalidation de la carte, par exemple tels que ceux décrits dans la Demande de Brevet n° 89 14417 de la Demanderesse.

On peut également prévoir que l'émetteur 1 envoie, aléatoirement, aux différents récepteurs des messages-leurres, c'est-à-dire des messages ne commandant aux cartes aucune opération ou commandant des opérations factices.

## Revendications

1. Procédé d'authentification de cartes à microprocesseur dans un système comportant au moins un centre de gestion et/ou de contrôle et/ou de distribution de prestations relié à au moins un terminal comprenant au moins un lecteur de cartes à microprocesseur, ledit procédé comportant l'étape d'authentification de cartes, ledit procédé étant **caractérisé par le fait qu'**il consiste à faire effectuer à la carte ou aux cartes de chaque terminal, pendant au moins une partie du temps pendant lequel une carte y est insérée ou des cartes y sont insérées, au moins une opération d'authentification, ladite opération d'authentification étant commandée par des messages produits de manière irrégulière par le centre de gestion.

2. Procédé selon la revendication 1, **caractérisé en ce que** si le résultat d'une opération d'authentification effectuée par une carte est incorrect, on inhibe le fonctionnement du terminal dans lequel la carte est insérée.

3. Procédé selon l'une des revendications 1 ou 2, **caractérisé en ce que** si le résultat d'une opération d'authentification effectuée par une carte est incorrect, cette carte est dévalidée physiquement.

4. Procédé selon l'une des revendications 1 à 3, **caractérisé en ce que** si le résultat d'une opération d'authentification effectuée par une carte est incorrect, un dispositif d'affichage du terminal affiche une indication de carte non valide.

5. Procédé selon l'une des revendications 1 à 4, **caractérisé en ce que** le centre de gestion envoie en outre des messages-leurre.

6. Système d'authentification de cartes à microprocesseur comportant au moins un centre de gestion (1) et au moins un terminal (2) comprenant au moins un lecteur de cartes à microprocesseur, le lecteur du terminal comportant des moyens (4') de commande de production de signaux d'authentification et des moyens d'analyse de réponse des cartes utilisées (5), **caractérisé en ce que**
le terminal comporte des moyens d'inhibition et/ou de dévalidation de carte et **en ce que**
le centre de gestion comporte un circuit (1') émettant de manière irrégulière des messages de commande d'opérations d'authentification pour faire effectuer au moins une opération d'authentification à la ou aux cartes de chaque terminal pendant au moins une partie du temps pendant lequel une ou des cartes sont insérées.

7. Système selon la revendication 6, **caractérisé en ce que** le lecteur de cartes comporte des moyens empêchant de bloquer un signal de dévalidation des cartes utilisées.

## Claims

1. Method for authenticating microprocessor cards in a system comprising at least one center for management and/or monitoring and/or distribution of facilities, which is linked to at least one terminal comprising at least one reader of microprocessor cards, the said method comprising the step of authenticating cards, the said method being **characterized in that** it consists in making the card or cards of each terminal perform, during at least some of the time during which a card is inserted therein or cards are inserted therein, at least one authentication operation, the said authentication operation being controlled by messages produced irregularly by the management center.

2. Method according to claim 1, **characterized in that** if the result of an authentication operation performed by a card is incorrect, the functioning of the terminal into which the card is inserted is disabled.

3. Method according to claims 1 or 2, **characterized in that** if the result of an authentication operation performed by a card is incorrect, the card is inserted is physically invalidated.

4. Method according to one of claims 1 to 3, **characterized in that** if the result of an authentication operation performed by a card is incorrect, a display device of the terminal displays a card not valid indication.

5. Method according to one of claims 1 to 4, **characterized in that** the management center moreover dispatches decoy messages.

6. System for authenticating microprocessor cards comprising at least one management center (1) and at least one terminal (2) comprising at least one reader of microprocessor cards, the reader of the terminal comprising means (4') for controlling production of authentication signals and means for analyzing the response of the cards used (5), **characterized in that**
the terminal comprises card invalidating and/or disabling means and **in that**
the management center comprises a circuit (1') emitting irregularly messages for controlling authentication operations so as to make the card or cards of each terminal perform at least one authentication operation during at least some of the time during which a card or cards are inserted.

7. System according to claim 6, **characterized in that** the card reader comprises means which prevent the blocking of a signal for invalidating the cards used.

## Patentansprüche

1. Verfahren zur Authentifizierung von Mikroprozessorenkarten in einem System mit mindestens einem Zentrum zum Management und/oder zur Kontrolle und/oder zur Verteilung von Leistungen, welches mit mindestens einem Endgerät verbunden ist, das mindestens einen Mikroprozessorenkarten-Leser umfasst, wobei das Verfahren den Schritt der Authentifizierung von Karten umfasst, wobei das Verfahren **dadurch gekennzeichnet ist, dass** es darin besteht, die Karte bzw. die Karten jedes Endgeräts während mindestens eines Teils der Zeit, während deren eine Karte hineingeschoben ist bzw. Karten hineingeschoben sind, zur Durchführung mindestens eines Authentifizierungsvorgangs zu veranlassen, wobei der Authentifizierungsvorgang durch Meldungen gesteuert wird, die unregelmäßig von dem Managementzentrum erzeugt werden.

2. Verfahren nach Anspruch 1, **dadurch gekennzeichnet, dass**, wenn das Ergebnis eines durch eine Karte durchgeführten Authentifizierungsvorganges inkorrekt ist, der Betrieb des Endgeräts, in das die Karte eingeschoben ist, unterdrückt wird.

3. Verfahren nach einem der Ansprüche 1 oder 2, **dadurch gekennzeichnet, dass**, wenn das Ergebnis eines durch eine Karte durchgeführten Authentifizierungsvorganges inkorrekt ist, diese Karte physikalisch devalidiert wird.

4. Verfahren nach einem der Ansprüche 1 bis 3, **dadurch gekennzeichnet, dass**, wenn das Ergebnis eines durch eine Karte durchgeführten Authentifizierungsvorganges inkorrekt ist, eine Anzeigevorrichtung des Endgeräts eine Angabe anzeigt, wonach die Karte ungültig ist.

5. Verfahren nach einem der Ansprüche 1 bis 4, **dadurch gekennzeichnet, dass** das Managementzentrum ferner Lockmeldungen sendet.

6. System zur Authentifizierung von Mikroprozessorenkarten, mit mindestens einem Managementzentrum (1) und mindestens einem Endgerät (2), das mindestens einen Mikroprozessorenkarten-Leser umfasst, wobei der Leser des Endgeräts Mittel (4') zur Steuerung der Erzeugung von Authentifizierungssignalen und Mittel zur Analyse der Antwort der verwendeten Karten (5) aufweist, **dadurch gekennzeichnet, dass** das Endgerät Mittel zur Kartensperrung und/oder Kartendevalidierung aufweist und dass das Managementzentrum einen Schaltkreis (1') aufweist, der unregelmäßig Meldungen zur Steuerung von Authentifizierungsvorgängen aussendet, um die Karte bzw. die Karten jedes Endgeräts während mindestens eines Teils der Zeit, während deren eine Karte hineingeschoben ist bzw. Karten hineingeschoben sind, zur Durchführung mindestens eines Authentifizierungsvorgangs zu veranlassen.

7. System nach Anspruch 6, **dadurch gekennzeichnet, dass** der Kartenleser Mittel aufweist, welche das Blockieren eines Signals zur Devalidierung der verwendeten Karten verhindert.
